# EUROPEAN PATENT SPECIFICATION

(11) **EP 1 868 747 B1**
(45) Date of publication and mention of the grant of the patent: **01.06.2016**
(21) Application number: 06795670.6
(22) Date of filing: 10.03.2006
(51) Int. Cl.: B09B 3/00, B09C 1/08, C02F 11/14

(54) **METHOD FOR NEUTRALIZATION AND SOLIDIFICATION OF ACID TAR OR SOIL COMPRISING ACID TAR**
VERFAHREN ZUR NEUTRALISIERUNG UND VERFESTIGUNG VON SAUREM TEER ODER SAUREN TEER ENTHALTENDEM BODEN
PROCÉDÉ DE NEUTRALISATION ET DE SOLIDIFICATION DE GOUDRON ACIDE OU DE SOL COMPRENANT DU GOUDRON ACIDE

(30) Priority: 15.03.2005 BE 200500133
(43) Date of publication of application: 26.12.2007
(73) Proprietor: DEC, 2070 Zwijndrecht (BE)
(72) Inventor: PENSAERT, Stany, B-9160 Lokeren (BE)
(74) Representative: Caers, Raphael Frans Ivo
(86) International application number: PCT/IB2006/052829
(87) International publication number: WO 2007/023424

(56) References cited:
- EP-A- 0 076 397
- EP-A- 0 655 493
- EP-A- 0 796 230
- JP-A- 2005 054 022
- US-A1- 2003 019 640

## Description

The invention relates to a method for neutralization and solidification into an agglomerated concrete-like product of acid tar, and/or contaminated soil comprising acid tar, in which the acid tar and/or soil contaminated with it are contacted with a treating agent, as described in the preamble of the first claim.

In the past, refining of petroleum fractions was carried out chemically, among other things by treatment of the petroleum fractions with for example sulphuric acid and/or oleum. In this process, which was conducted on a large scale, a residue was released, named acid tar or acid sludge. This acid sludge also comprises, next to an excess sulphuric acid, amongst other things sulfon acids, esters, organic compounds with a high molecular weight, sludge products and water emulgated therein. Acid sludge generally has a dark brown to black colour. Due to the large scale on which the refining was conducted, several different storage locations are now present in Belgium and other countries, in which substantial amounts of acid sludge are stored. The acid sludge can occur in different physical forms, namely as a fluid with a relative low viscosity, for example oily, or as a solid state material. The acid sludge can also be stored in different tanks, but most of the time it is stored in so-called acid sludge basins. In the latter case the acid sludge is for example stored in basins without bottomsealing (for example in the form of a foil), which is of course very undesirable due to the risk of leaking, with contamination of soil and groundwater as a consequence. Due to the excess of sulphuric acid residually present in the acid sludge, acid sludge shows acid to very acid characteristics in water which makes acid sludge extremely corrosive. When acid sludge is stored in open air, large quantities of sulphur dioxide can be emitted to the air. Acid sludge therefore represents a considerable risk to the environment.

Therefore there is a need for a method and treating agent capable of solving this problem.

EP-A-0.076.397 disclose a method in accordance with the preamble of claim 1 and describes a method for recovering compounds comprising carbon from acid sludge which is stored in solid state form or which is dumped and originates from a treatment with sulphuric acid of petroleum fractions. The method described in EP-A-0.076.397 is meant to limit the risk of emission of noxious gasses to a minimum. Therefore the acid sludge is not treated in situ, but the surface of the stored acid sludge is covered with an amount of alkaline powder, which forms a physical barrier against escaping gas, provides a neutralisation of the surface acidity and reacts with the gaseous sulphuric oxides. In stead of a powder also an aqueous solution, dispersion or aqueous suspension can be used. The acid sludge thus covered is subsequently fed to a reactor for obtaining a full chemical neutralisation. Thereto the acid sludge is intensively mixed with additional amounts of alkaline powder. During the mixing the reaction mixture heats up. A ventilation system is provided for abduction of the gasses which are released during the mixing. As alkaline powder, amongst others, calcium oxide or hydroxide, calcium carbonate, mixtures thereof with alkaline-earth metals carbonates or other organic bases are used. Even though the powders have an excellent neutralising effect, their absorbing capacity and cementing ability is insufficient.

From US/20030019640 A1 it is known to use sludge obtained as a side product in paper-recycling, in different applications, in which always use is made of the property that the product is able to absorb large quantities of fluids. The sludge known from US/20030019640 A1 has a white-grey colour, has a pH of about 8,5 and comprises a weight percentage of about 40 of clay, a weight percentage of about 30 of fibres originating from the paper, a weight percentage of about 20 of calcium carbonate and further colouring agents latex, defoamer and titanium dioxide. The material can be used in a form in which it comprises a relative large amount of water, in the form of watery sludge, as a dry powder with a weight percentage of water of less than 1. The material can also be used in form of ashes obtained by burning sludge in an oxygen-rich environment, packed in a semi-permeable package with openings which are permeable for fluids, but which prevent leaking-out of the powder. The material can be used as an absorbent for hydrocarbons, in which the absorbed hydrocarbons are recovered by pressing and/or a treatment with steam. It is however not disclosed by US/20030019640 A1 that sludge originating from paper-recycling would be suitably capable of binding acid sludge in such a way that a solid, hard and concrete-like product is formed with a good strength, a high retainment of form and a limited tendency to settle on a long term.

JP200505422 describes to mix soil with paper chalk as a texture improver, for immobilizing heavy metals and promoting sludge formation.

The method according to the invention aims at providing an efficient method for treating contaminated compounds and/or contaminated soil, with a reduced risk to environmental contamination.

To this end the method according to the invention is characterised as described in the characterising part of the first claim.

The method according to the invention is as described in claim 1.

Surprisingly, it turned out that by adding a mixture comprising paper chalk to the acid sludge and/or the soil comprising acid sludge, the acid sludge is efficiently transformed into a product with following properties, possibly in combination:
- neutral: the acidity of the obtained product is at least neutral to alkaline, since the acid present in the acid sludge is chemically converted with the alkaline substances present in the treating agent. Moreover it appeared that a large part of the, and preferably nearly all, sulphur dioxide present in the acid sludge is chemically bound, so that emission of it is strongly reduced;
- stabilised: the product becomes drier, more viscous and therefore more easy to handle and to process;
- solidified: the rigidity of the product is such that the geotechnical and physical characteristics are sufficient to permit stacking it or processing it as a soillike product, or even to form it into a cementlike product;
- immobilisation: as a further benefit following from the aforementioned properties, the material can be improved with time chemically as well as for solidification properties, which is expressed in a decreased ability to leach out anorganic and organic contaminations with water, for example measured by DIN 38414 S4.

Paper chalk or paper ash is created in a process, in which amongst other things, sludge of de-inking and of water purification of the paper-recycling is burned. This kaolin comprising paper residue is the residual substance which is released during recycling - more particularly during de-inking - of old paper in order to render it suitable for new products made out of paper-and cardboard. The paper residue, by means of a process, based on fluidized bed incineration, developed especially for this, is converted into fly ash, which is paper chalk (or -paper ash), a mineral product which usually finds a useful application as an additive in the concrete and cement industry. Such a known method is for example described in NL-9401366 and in EP 0 796 230 B1. Paper chalk is commercially available, for example from Stora Enso Belgium, Parenco the Netherlands, or from CDEM the Netherlands under the trade name Top-Crete™. Their use for the treatment and neutralisation of acid sludge and/or soil contaminated with acid sludge is thus far not known.

Mineralologically spoken, paper chalk exists mainly of metakaolin and calcium oxides and/or -hydroxides. When expressed as base oxides, paper chalk mainly consists of ca. 35 to 65 weight percentage CaO, of ca. 20 to 35 weight percentage SiO₂, and of ca. 10 to 20 weight percentage Al₂O₃ and comprises almost no CaCO₃. The colour of paper chalk varies from white to beige. The paper chalk preferably used has a pH of at least 10, preferably at least 12, for example 12,5.

Due to its composition and physical nature, paper chalk has a large specific surface, which amongst other things results in a large absorbing capacity for water and other fluids like oil, sludgelike substances, etc. This high absorbing capacity can for example be proved by means of the 'bitumen number', measured by NEN-EN 13179-2, where values above 50, even above 60 are recorded.

It turned out that the use of paper chalk in the treatment of acid sludge and/or soil contaminated with acid sludge, the solidifying, stabilising and in particular neutralising of the material is improved, in which the amount of free chalk present in the paper chalk provides an acidity of the treated material of minimally 7. Furthermore it was noticed that while mixing the acid sludge with the paper chalk an intense bond of both materials is created in which the paper chalk functions as a sort of cement, which hardens to become a product comparable to concrete. In this way an irreversible solidification and immobilisation.of the acid sludge is obtained. In the same time fluid fractions of oil which may be present in the acid sludge are absorbed in the capillary structure of the paper chalk and retained there.

Although the method according to the invention is particularly suitable for the treatment of acid sludge, she is also applicable for treating other compounds, for example soil contaminated with acid sludge and/or other mineral materials and/or residual currents of a production process.

It turned out that the best results are achieved when the paper chalk is added as a fine-grained material. It hereby has advantages because of the optimal reactivity when the grainsize distribution of the fine-grained material complies with D₅₀ ≤ 100µm and D₇₀ ≤ 200µm. In this application the characteristic dimension Dₓ means that x weight percentage of the paper chalk particles consists of particles with a dimension ≤ Dx. The grainsize distribution of the mixture is determined in a known way by consecutively sifting of the particles by means of sieves with a different mesh size.

The composition and relative coarse distribution of grains of the paper chalk with respect to other commercial chalklike products used for acid sludge treatment (for example slaked lime as described in EP 0 655 493 B1) ensure that during mixing a treating agent comprising paper chalk with acid sludge, only a limited and controllable exothermic reaction occurs. Because of this, the mixture only heats up slightly during mixing, for example 10 to 20 °C, so that the mixing process can pass off safely, without emitting vapour and steam and without damaging the mixer.

Additionally, the alkaline character and the large specific surface of the paper chalk ensure that the sulphur dioxide which threatens to escape from the acid sludge during the mixing is chemically bonded in the mixture and thus can no longer escape to the environment. Additionally, due to this characteristic, paper chalk can be used to cover acid sludge and/or soil comprising acid sludge, wherever it may be stored, so that emission of sulphur dioxide from this sludge is significantly reduced.

In the method according to the invention, the amount of added treating agent is chosen within broad boundaries as follows: Neutralisation of the acid sludge is already achieved when a weight percentage of 0,1 to 10 of treating agent is added to the acid sludge and/or to the soil contaminated with the acid sludge, in which the weight percentage relates to the total weight of the acid sludge and/or the soil contaminated with the acid sludge. Solidification is accomplished from a weight percentage of 10 to a weight percentage of 100 of added treating agent to the acid sludge and/or to the soil contaminated with acid sludge.

Paper chalk (synonym: paper ash) can, if wanted, be applied for the treatment of soil contaminated with acid sludge and/or other contaminations together with other additives, like, but not limited to, kinds of cement, hydraulic binders, pozzolanic substances, fly ashes, metallurgic slags, sand, and similar more.

The method according to the invention can be applied on-site ('in-situ') as well as at another location ('ex-situ'), for example in a centre for processing. Preferably, the method according to the invention is applied ex-situ. This has the benefit that the soil to be treated and/or the acid sludge can be mixed more homogeneously.

The method according to the invention describes the neutralization and solidification into an agglomerated concrete-like product of acid tar and/or soil comprising acid tar, and is not limited to certain methods used for the mixing of the different materials, more particularly the treating agent and the material from which the sediment and/or the soil layer is made of. Thus, it is possible to mix the different materials by means of mechanical mixing, in which devices as mixing with the tank of the valve, mixture with a rotor tank, all classic imaginable mixers ,... are being used. In such a way the mixing can be performed in-situ as well as ex-situ, parallel as well as in a production line, before as well as during and/or after the transport of the materials.

In another different suitable method the treating agent is added to a basin of acid sludge. The treating agent is mixed in by for example shovelling, mixing in with the tank of a valve, dry mixing, and any other suitable mixing method. It is also possible, in order to obtain a good mixing, to use a pugmill mixer. In case the acid sludge is in solid state and/or viscous state, the acid sludge, if desired, can, in order to obtain a further improvement of the efficiency of the treatment, be broken down by means of, for example, a breaking installation. This benefits the homogenous mixing in all of the components (treating agent and acid sludge).

After the treatment of the acid sludge and/or the soil contaminated with the acid sludge, the product obtained with the treatment can further, with respect to at least obtaining neutralisation and eventual additional solidification and stabilisation, follow different paths. Thus it is possible to controllably dump, subject to incineration and/or co-incineration the product of the treatment, for example, however not limited to, co-incineration in cement ovens, waste incineration ovens, and all other type of ovens, to be reused as material for replenishing or filling up in stead of ground, and so forth and so on. Eventually, the product for these paths is further diluted with high-caloric substances, such as for example wood chips, sawdust and/or paper, as described in EP 0 655 493 B1.

The method according to the invention relating to the use of paper chalk to neutralise, stabilize and/or solidify acid sludge or soil contaminated with acid sludge produces good results with relation to these characteristics. The results after treatment can express themselves as follows:
- with relation to neutralisation: the pH of the product after treatment is > 7, even > 11;
- as for the solidification, the CBR (Californian Bearing Ratio) of the product can, thanks to adding the treating agent according to the invention, in particular paper chalk, be larger than 6 %, even 11 %, and even > 20 %, measured according to ASTM D 1883 - 99 or equivalent;
- as for the solidification: as an alternative, the modulus of compressibility after standard condensation of the product in the field can mount up to > 10 MPa, even > 17 MPa, even > 30 MPa, measured according to ASTM D 1195 - 93, ASTM D 1196 - 93 or equal.
- With relation to the stabilisation of the treated soils: with relation to mechanical characteristics, the strength behaviour expresses itself in the limited deformation ability on the long term. The setting measured according the ASTM D 2435 - 90 can be limited to 5 % under a load of 160 kPa;
- As for the immobilisation of the contaminations with relation to the chemical characteristics, the behaviour of washing out of TOC (Total Organic Carbon), is determined after the DIN 38414 S4 washing out test, and TOC is measured according to CMA 2/l/D.1 reduced by at least a factor 5, even 10, even 20;
- with relation to long term neutralisation, the pH of an eluate remains, measured based on DIN 38414 S4 even after eluating 10 days, at least > 7, even 11.

## Claims

1. Method for neutralization and solidification into an agglomerated concrete-like product of a material selected from acid tar and soil comprising acid tar or a mixture thereof, in which the material is contacted with a treating agent, **characterized in that**, the treating agent comprises paper chalk and the paper chalk is added to the material and mixed and wherein said paper chalk is added to the material in an amount chosen from 0.1 to 10 weight percentage in order to obtain neutralisation or chosen from 10 to 100 weight percentage in order to obtain solidification, and
in which the weight percentage is expressed as weight of the paper chalk relative to the weight of the material.

2. Method according to claim 1, **characterised in that**, the paper chalk is added as a fine-grained material with a grain size distribution, which complies with D50 ≤ 100µm, and D70 ≤ 200µm.

3. Method according to claim 2, **characterized in that**, mixing is carried out in such a way, that a controllable exothermic reaction occurs at a temperature between 10°C and 20°C.

4. Method according to anyone of claims 1-3, **characterised in that**, the material is covered with the paper chalk in view of reducing emission of sulphur dioxide to the environment.

## Patentansprüche

1. Verfahren zur Neutralisierung und Verfestigung in ein agglomeriertes betonähnliches Produkt von einem Material ausgewählt aus saurem Teer oder sauren Teer enthaltendem Boden oder einer Mischung davon, wobei das Material in Kontakt mit einem Behandlungsmittel gebracht wird, **dadurch gekennzeichnet, dass** das Behandlungsmittel Papierkreide umfasst und die Papierkreide zum Material hinzugefügt und gemischt wird und wobei die erwähnte Papierkreide zum Material in einer Menge gewählt von 0,1 bis 10 Gewichtsprozent hinzugefügt wird, um Neutralisierung zu erreichen, oder gewählt von 10 bis 100 Gewichtsprozent, um Verfestigung zu erreichen, und
in dem der Gewichtsprozent als Gewicht der Papierkreide in Bezug zum Gewicht des Materials ausgedrückt ist.

2. Verfahren nach Anspruch 1, **dadurch gekennzeichnet, dass** die Papierkreide als fein gemahlenes Material mit einer Korngrößenverteilung hinzugefügt wird, die D50 ≤ 100 µm und D70 ≤ 200 µm entspricht.

3. Verfahren nach Anspruch 2, **dadurch gekennzeichnet, dass** das Mischen so ausgeführt wird, dass bei einer Temperatur zwischen 10 °C und 20 °C eine kontrollierbare exotherme Reaktion stattfindet.

4. Verfahren nach irgendeinem der Ansprüche 1 bis 3, **dadurch gekennzeichnet, dass** das Material mit der Papierkreide bedeckt wird, um die Emission von Schwefeldioxid in die Umwelt zu senken.

## Revendications

1. Procédé de neutralisation et de solidification en un produit de type béton aggloméré d'un matériau choisi parmi un goudron acide et un sol comprenant un goudron acide ou un mélange de ceux-ci, dans lequel le matériau est mis en contact avec un agent de traitement, **caractérisé en ce que** l'agent de traitement comprend de la craie à papier et la craie à papier est ajoutée au matériau et mélangée et dans lequel la craie à papier est ajoutée au matériau dans une quantité de 0,1 à 10 % en poids afin d'obtenir la neutralisation ou de 10 à 100 % en poids afin d'obtenir la solidification, et
dans lequel le pourcentage en poids est exprimé en poids de la craie à papier par rapport au poids du matériau.

2. Procédé selon la revendication 1, **caractérisé en ce que** la craie à papier est ajoutée sous la forme d'un matériau à grains fins ayant une granulométrie qui est conforme à D50 ≤ 100 µm et D70 ≤ 200 µm.

3. Procédé selon la revendication 2, **caractérisé en ce que** le mélange est effectué d'une manière telle qu'une réaction exothermique contrôlable survient à une température comprise entre 10°C et 20°C.

4. Procédé selon l'une quelconque des revendications 1 à 3, **caractérisé en ce que** le matériau est couvert avec la craie à papier en vue de réduire l'émission de dioxyde de soufre vers l'environnement.
